# EUROPÄISCHE PATENTSCHRIFT

(11) **EP 1 097 792 B1**
(45) Veröffentlichungstag und Bekanntmachung des Hinweises auf die Patenterteilung: **03.07.2002**
(21) Anmeldenummer: 00123820.3
(22) Anmeldetag: 02.11.2000
(51) Int. Cl.: B29C 45/26

(54) **Vorrichtung zum Formen und Entformen von Rohrbögen sowie Verfahren zum Betrieb einer solchen Vorrichtung**
Apparatus for moulding and removing bent pipes as well as method of operating such an apparatus
Dispositif pour mouler et enlever des tubes coudés ainsi que procédé d'opération d'un tel dispositif

(30) Priorität: 04.11.1999 DE 19953016
(43) Veröffentlichungstag der Anmeldung: 09.05.2001
(73) Patentinhaber: Beck, Klaus, 64546 Mörfelden-Walldorf (DE)
(72) Erfinder: Beck, Klaus, 64546 Mörfelden-Walldorf (DE)
(74) Vertreter: Schubert, Siegmar, Dipl.-Ing.

(56) Entgegenhaltungen:
- DE-U- 9 400 828
- GB-A- 1 230 899
- PATENT ABSTRACTS OF JAPAN vol. 12, no. 121 (M-686), 15. April 1988 (1988-04-15) -& JP 62 249721 A (MAZDA MOTOR CORP), 30. Oktober 1987 (1987-10-30)

## Beschreibung

Die Erfindung betrifft eine Vorrichtung zum Formen und Entformen von Rohrbögen, die aus Kunststoff gespritzt werden, nach dem Oberbegriff des Anspruchs 1.

Ein weiterer Aspekt der Erfindung betrifft ein Verfahren zum Betrieb einer solchen Vorrichtung.

Aus der Praxis bekannt sind derartige Form- bzw. Entformungstechniken mit einem mehrteiligen Innenkern, der jedoch in der Regel kompliziert, umständlich zu handhaben und gegen Beschädigungen anfällig ist. Dies gilt insbesondere, wenn ein beispielsweise sechsgeteilter Innenkern verwendet wird, dessen Formflächen entsprechend der Innenwand des Rohrbogens gekrümmt sind, der aber vollständig ebene Trennflächen aufweist, an denen die Kernteile aneinanderliegen. Einzelne innenliegende Kernteile können sogar insgesamt mit planen Flächen als Parallelepiped geformt sein. Die Kernteile erstrecken sich dabei jeweils nur um etwa einen halben Umfang des Rohrbogens.

Wenn sich die Kernteile bzw. der Innenkern über mehr als die Hälfte des Rohrbogens, insbesondere über einen gesamten Rohrbogen von 90° erstrecken, kann die Entformung erschwert sein. Da bei der Entfernung des Innenkerns große Kräfte aufgebracht werden müssen, ist diese Entformungstechnik nur bei dickwandigen Rohrbogen sinnvoll möglich. Bei einem dünnwandigen Bogen würde das Material ausreißen, so daß dieser nicht mehr verwendbar wäre. - Viele bekannte Entformungstechniken werden daher nur bei größerer Wandstärke der Rohrbögen angewendet. Weiterhin sind die bekannten Entformungstechniken auf Rohrbögen bestimmter Radien oder Winkel mit kurzen geraden Enden oder Muffen beschränkt.

Der vorliegenden Erfindung liegt daher die Aufgabe zugrunde, eine Vorrichtung zum Formen und Entformen von Rohrbögen der eingangs genannten Gattung dahingehend weiterzubilden, daß auch Rohrbögen mit dünnen gespritzen Wandungen und allen üblichen Radien unproblematisch entformt werden können. Es soll auch möglich sein, solche Rohrbögen mit langen geraden Enden bzw. Muffen gut zu entformen.

Diese Aufgabe wird durch eine Vorrichtung gemäß dem kennzeichnenden Teil des Anspruchs 1, also durch Verwendung eines besonderen toroidabschnittförmigen Innenkerns für den zu spritzenden Rohrbogen gelöst, wobei der Innenkern nur aus zwei Kernteilen besteht. Deren Trennflächen, die außerhalb eines Mittelradius des Rohrbogens liegen, sind nicht plan, sondern nur annähernd gemäß dem Radius der Mitte des Rohrbogens (Mittelradius) dergestalt in Längsrichtung gekrümmt, daß sich beide Kernteile von einer ersten der beiden Stirnseiten des Rohrbogens zueinander gegenläufig stetig verjüngen. Die beiden Kernteile, die an ihren Trennflächen während des Spritzens aneinanderliegen, bilden dabei das Innenvolumen des Rohrbogens. Infolge dieser Ausbildung der beiden Kernteile können diese leicht durch Bewegung in Umfangsrichtung entformt, d.h. aus dem gespritzten Rohrbogen herausgenommen werden. Insbesondere kann so mit dem äußeren Kernteil und anschließend in gleicher Weise mit dem innenliegenden kleineren Kernteil verfahren werden. Da nur zwei Kernteile, die sich jeweils über den gesamten Umfang des Rohrbogens bzw. dessen gekrümmten Abschnitts, also ausgenommen von Muffen oder geraden Enden erstrecken, vorgesehen sind, ist die Entformungstechnik unkompliziert handhabbar.

Die leichte Entformbarkeit ergibt sich gemäß Anspruch 2 besonders daraus, daß ein äußerer Kernteil des Innenkerns von einer ersten Stirnseite des Rohrbogens her entformt wird, an der ein dickeres Ende des äußeren Kernteils liegt, und anschließend ein inneres Kernteil des Innenkerns von einer zweiten Stirnseite des Rohrbogens her, an welcher ein dickeres Ende des inneren Kernteils liegt, entformt wird.

Gemäß Anspruch 3 kann die Vorrichtung so weitergebildet sein, daß Muffen an den Enden des Rohrbogens mit zylindrischen, sich über den gesamten Querschnitt der Muffen erstreckenden Muffenkernen geformt werden, die bei dem anschließenden Entformen vor den Kernteilen des toroidförmigen Innenkerns entformt werden. Die verwendeten Muffenkerne sind einstückig.

Die Erfindung wird im folgenden anhand einer Zeichnung mit zwei Figuren erläutert, woraus sich weitere Merkmale und Vorteile ergegen. Es zeigt:
- Fig. 1: einen Rohrbogen, der erfindungsgemäß geformt ist, mit innenliegenden Kernteilen in einem Längsschnitt und
- Fig. 2: den Längsschnitt gemäß Fig. 1 nach Entfernen der Kernteile.

In der Zeichnung ist mit 1 allgemein ein Rohrbogen bezeichnet, an dessen beiden Enden einstückig je eine Muffe 2 bzw. 3 angeformt ist. Der gesamte Rohrbogen besteht aus gespritztem Kunststoff. Seine - ohne Formteile - offenen Stirnseiten sind mit 4 und 5 bezeichnet.

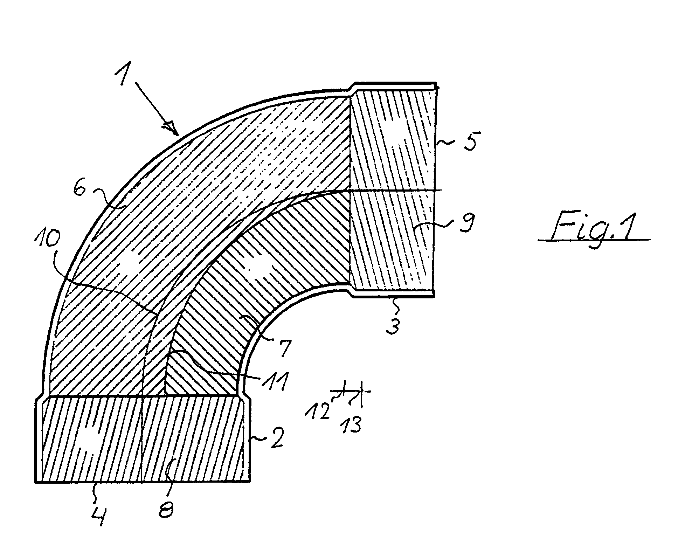

Das Innenvolumen des Rohrbogens 1 ist wie in Fig. 1 dargestellt während des Spritzvorgangs vollständig mit zusammengesetzten Formteilen ausgefüllt, und zwar mit einem äußeren Formteil 6 und einem inneren Formteil 7, die sich beide über die gesamte bogenförmige Länge bzw. Länge in Umfangsrichtung des Rohrbogens 1 erstrecken und zusammengesetzt einen nicht bezeichneten toroidförmigen Innenkern bilden, sowie jeweils abschließend in der Muffe 2 bzw. Muffe 3 mit einem zylindrischen, sich über den gesamten Querschnitt der Muffe erstreckenden Muffenkern 6 bzw. 7.

Der toroidabschnittförmige Innenkern besteht somit aus nur zwei Kernteilen, nämlich dem äußeren Kernteil 6 und dem inneren Kernteil 7, die an beiderseitigen Trennflächen 10 aneinanderliegen. Die Formflächen außerhalb der Trennflächen der Kernteile weisen die gekrümmte Toroidform auf der Innenseite des Rohrbogens 1 auf. Die Trennflächen 11 sind wie im einzelnen in Fig. 1 dargestellt gegenüber einer Bogenmitte 10, die durch eine in Umfangsrichtung gekrümmmte Fläche mit einem mittleren Krümmungsradius um den Punkt 12 definiert ist, exzentrisch nach innen versetzt, und zwar so, daß die Trennflächen 11 an der obersten Stelle in die Bogenmitte 10 einlaufen. Dadurch sind das äußere Kernteil 6 und das innere Kernteil 7 in Längsrichtung so gekrümmt, daß sich das äußere Kernteil 6 von dem Muffenkern 8 bzw. der Stirnseite 4 zu dem Muffenkern 9 bzw. der Stirnseite 5 hin verjüngt. Analog umgekehrt verjüngt sich der innere Kernteil 7 von dem Muffenkern 9 bzw. der Stirnseite 5 zu dem Muffenkern 8 bzw. der Stirnseite 4 hin. Der von einem Krümmungsmittelpunkt 13 ausgehende Radius der Trennflächen 11 ist wie dargestellt etwas größer als der Radius der Mitte des Rohrbogens, der an den Punkt 12 angesetzt gedacht werden kann.

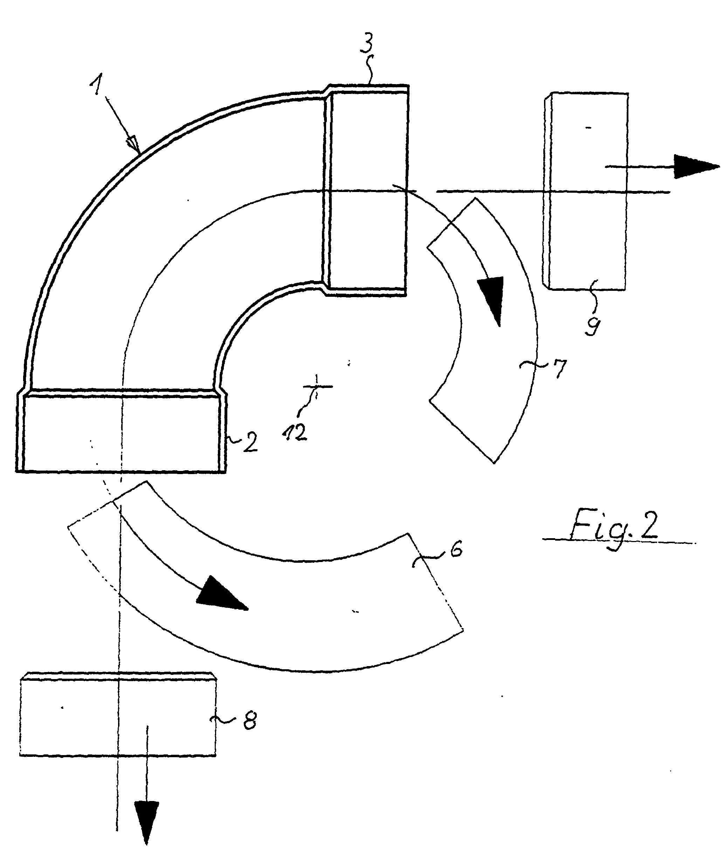

In Fig. 2 ist schaubildlich dargestellt, wie der gespritzte Rohrbogen 1 entformt wird:

Zunächst werden die Muffenkerne 8 und 9 entformt, wie mit nicht bezeichneten Pfeilen angedeutet. Daran anschließend mit einer Bewegung in Umfangsrichtung entgegen dem Uhrzeigersinn wird der äußere Kernteil 6 entkernt und zuletzt im Uhrzeigersinn der innere Kernteil 7, der an dem Wandteil des Rohrbogens 1 mit geringstem Krümmungsradius anliegt. Damit ist der Entformvorgang bereits beendet.

## Patentansprüche

1. Vorrichtung zum Formen und Entformen von Rohrbögen, die aus Kunststoff gespritzt werden, unter Verwendung eines Innenkerns mit Kernteilen, die sich zumindest über einen Teilumfang des Rohrbogens erstrecken und sich einzeln jeweils nur über einen Teil des lichten Querschnitts des Rohrbogens erstrecken, und einander zur Anlage gelangende außerhalb der Mitte des Rohrbogens liegende, in wenigstens einer Querrichtung gerade Trennflächen aufweisen, wobei der gespritzte Rohrbogen von dessen beiden Stirnseiten her entformt wird,
**dadurch gekennzeichnet,**
**daß** ein toroidabschnittförmiger Innenkern aus zwei Kernteilen (6,7) verwendet wird, deren Trennflächen (10) dergestalt zur Mitte des Rohrbogens versetzt und in Längsrichtung mit größerem Radius als die Mitte des Rohrbogens gekrümmt sind, daß sich die beiden Kernteile (6,7) von einer ersten Stirnseite (4) zu einer zweiten Stirnseite (5) zueinander gegenläufig stetig verjüngen.

2. Verfahren zum Betrieb einer Vorrichtung nach Anspruch 1,
**dadurch gekennzeichnet,**
**daß** ein äußerer Kernteil (6) des Innenkerns von einer ersten (4) Stirnseite des Rohrbogens her entformt wird, an der ein dickeres Ende des äußeren Kernteils (6) liegt, und
**daß** anschließend ein inneres Kernteil (7) des Innenkerns von einer zweiten (5) Stirnseite des Rohrbogens her entformt wird.

3. Verfahren nach Anspruch 2,
**dadurch gekennzeichnet,**
**daß** Muffen (2,3) an den Enden des Rohrbogens mit zylindrischen, sich über den gesamten Querschnitt der Muffen (2,3) erstreckenden Muffenkernen (8,9) geformt werden, die anschließend vor den Kernteilen (6,7) des toroidabschnittförmigen Innenkerns entformt werden.

## Claims

1. Apparatus for moulding pipe bends injection-moulded in plastic and for extracting them from the mould, using an internal core having core components that extend at least along part of the circumference of the pipe bend and each of which extends individually only over part of the clear cross-section of the pipe bend, and which have separation surfaces, straight in at least one cross-section, that rest in contact with one another a distance away from the middle of the pipe bend, such that the injection-moulded pipe bend can be extracted from the mould at its two ends,
**characterised in that**
an internal core shaped as a toroidal segment with two core components (6, 7) is used, whose separation surfaces (10) are offset relative to the middle of the pipe bend and are curved in the longitudinal direction with a larger radius than the middle of the pipe bend in such manner that the two core components (6, 7) taper smoothly in opposite senses to one another from a first end face (4) towards a second end face (5).

2. Method for operating apparatus according to Claim 1,
**characterised in that**
an outer core component (6) of the internal core is extracted from the mould at a first end (4) of the pipe bend at which the thicker end of the said outer core component (6) is located, and then an inner core component (7) of the internal core is extracted from a second end (5) of the pipe bend.

3. Method according to Claim 2,
**characterised in that**
sockets (2, 3) are moulded at the ends of the pipe bend by means of cylindrical socket cores (8, 9) that extend across the full cross-section of the sockets (2, 3), which are then extracted from the mould before the core components (6, 7) of the internal core shaped as a toroidal segment are extracted.

## Revendications

1. Dispositif pour le moulage et le démoulage de coudes de tuyau courbes, qui sont moulés par injection en matière plastique, moyennant l'utilisation d'un noyau interne comprenant des éléments de noyau qui s'étendent au moins sur une partie de la longueur d'extension du coude de tuyau et s'étendent séparément, pour chacun d'eux, sur une partie seulement de l'ouverture libre du coude de tuyau, et qui présentent des surfaces de séparation droites dans au moins une direction transversale, venant se mettre en appui l'une sur l'autre en se plaçant à l'écart de l'axe central du coude de tuyau, le coude de tuyau moulé par injection étant démoulé depuis ses deux faces d'extrémité,
**caractérisé**
**en ce qu'**est utilisé un noyau interne en forme de secteur de tore, constitué de deux éléments de noyau (6, 7), dont les surfaces de séparation (10) sont décalées par rapport à l'axe central du coude de tuyau et incurvées, dans la direction de sa longueur, suivant un rayon plus grand que celui de l'axe central du coude de tuyau, dans une mesure telle que les deux éléments de noyau (6, 7) se rétrécissent en continu, dans des sens mutuellement opposés, depuis une première face d'extrémité (4) jusqu'à une seconde face d'extrémité (5).

2. Procédé pour l'exploitation d'un dispositif selon la revendication 1,
**caractérisé**
**en ce qu'**un élément de noyau extérieur (6) du noyau interne est retiré, pour le démoulage, par une première (4) face d'extrémité du coude de tuyau, au niveau de laquelle est située l'extrémité la plus épaisse de l'élément de noyau extérieur (6), et en ce qu'un élément de noyau intérieur (7) du noyau interne est ensuite retiré par une seconde (5) face d'extrémité du coude de tuyau.

3. Procédé selon la revendication 2,
**caractérisé**
**en ce que** des embouts de raccordement (2, 3) sont moulés aux extrémités du coude de tuyau à l'aide de noyaux cylindriques d'embout de raccordement (8, 9) s'étendant sur la section transversale entière des embouts de raccordement (2, 3), les noyaux d'embout de raccordement étant ensuite, pour le démoulage, extraits avant les éléments de noyau (6, 7) du noyau interne en forme de secteur de tore.
